(19) Europäisches Patentamt
European Patent Office
Office européen des brevets

(11) EP 0 842 796 A1

## (12) EUROPÄISCHE PATENTANMELDUNG

(43) Veröffentlichungstag:
20.05.1998 Patentblatt 1998/21

(51) Int. Cl.⁶: **B60D 1/18**

(21) Anmeldenummer: 97119607.6

(22) Anmeldetag: 10.11.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 13.11.1996 DE 29619702 U

(71) Anmelder:
• Jochem, Martin
78462 Konstanz (DE)
• Öktem, Hakan
78465 Konstanz (DE)

(72) Erfinder: Jochem, Martin
78462 Konstanz (DE)

(54) **Vorrichtung zur progressiven Kraftübertragung**

(57) Die Vorrichtung ist vorzugsweise als Abschleppseil für Fahrzeuge vorgesehen. Sie soll durch ein progressives Verhalten Schwingungen beim Abschleppen vermeiden. Diese progressive Vorrichtung ermöglicht einen Kraftaufbau, der bei größerer Auslenkung die Kraft schneller ansteigen läßt als bei geringer Auslenkung.

Sie besteht aus mehreren Seilen, die sich während der Kraftübertragung in unterschiedlich gespanntem Zustand befinden. Die linearen Federkonstanten der einzelnen Seile werden zu einer exponentialen Kurve überlagert. Die dadurch entstehende Progressivität kann individuell auf ein zu lösendes Schwingungsproblem bei einer Kraftübertragung angepaßt werden, indem die Schrittweite zwischen den verschieden gespannten Seilen geändert wird.

Abbildung 1

EP 0 842 796 A1

**Beschreibung**

Zugvorrichtungen zur Kraftübertragung zwischen Massekörpern kommen bei verschiedenen Anwendungen zum Einsatz.

Bisherige Vorrichtungen, die z.B. dazu benutzt werden, ein Kfz durch ein anderes Kfz abzuschleppen und dabei Kraft zu übertragen, zeichnen sich dadurch aus, daß Kraftstöße, die dadurch entstehen, daß die beiden Massekörper, z.B. schleppendes und geschlepptes Kfz, die sich nicht immer mit der gleichen Geschwindigkeit fortbewegen, entweder nicht oder durch verschiedene, in die Vorrichtung eingebaute Mechanismen kompensiert werden.

Solche Mechanismen sind beispielsweise in ein Seil eingebaute Federn oder Seile, die durch ihren Aufbau selbst federn, wie z.B. geflochtene Hanfseile oder Seile aus Kunsttoffasern mit Federeigenschaften aufgrund ihrer Materialbeschaffenheit. Alle bisherigen Vorrichtungen dieser Art sind in der Lage, Kraftspitzen aufzunehmen und dadurch zu verhindern, daß die Kraftverbindung zwischen den beiden Massekörpern überlastet oder zerstört wird.

Bei diesen bisherigen handelsüblichen Vorrichtungen führt dies dazu, daß die in der Vorrichtung zur Kraftübertragung aufgenommene Energie linear freigesetzt wird, wodurch sich diese Vorrichtungen nicht schnell genug auf einen neu entstandenen Lastzustand einstellten, so daß das geschleppte Fahrzeug auf eine höhere Geschwindigkeit beschleunigt wird, und das geschleppte Fahrzeug sich danach schneller bewegt als das Zugfahrzeug.

Die dadurch entstehenden Schwingungen führen zu Kraftspitzen, die die Vorrichtung aufnehmen muß. Diese Schwingungen lassen sich nur durch die Reaktion und das Verhalten der beiden Fahrer vermeiden. Dies erfordert besondere Fähigkeiten, die man nicht bei jedem Fahrer voraussetzten kann, insbesondere, da das Abschleppen von Kfz nicht täglich geübt wird. In speziellen herkömmlichen Vorrichtungen wird versucht, diese Schwingungen dadurch zu kompensieren, daß beispielsweise konische Federn, die sich progressiv verhalten, verwendet werden. Diese progressiven Federn ermöglichen einen Kraftaufbau, der bei größerer Auslängung die Kraft schneller ansteigen läßt als bei geringer Auslängung. Solche Federn bieten aber in bestimmten Anwendungsbereichen, wie beim Abschleppen von Kraftfahrzeugen, keine ausreichende technische Lösung an, da sie nicht über einen ausreichend großen Federweg verwendet werden können.

Gegenstand der Erfindung ist eine Vorrichtung, die sich über den gesamten Federbereich progressiv verhält.

Erfindungsgemäß wird die Progressivität der oben beschriebenen Feder durch folgende Vorrichtung ersetzt:

Die Federeigenschaft von mindestens zwei einzeln aufgehängten Seilen wird so überlagert, daß zuerst ein leichter Kraftanstieg durch die Federkraft eines Seils erreicht und durch das Hinzukommen der Federkraft eines zweiten Seils verstärkt wird. Dies wird beispielsweise erreicht, indem die Länge der Seile unterschiedlich gewählt wird.

Mit steigender Anzahl unterschiedlich langer Seile nähert man sich einer Kurve an, die durch die Funktion $y = n^x$ dargestellt wird, wobei das Verhältnis zwischen $y$ und $x$ das Verhältnis zwischen ansteigender Kraft und Auslängung darstellt. Die Konstante $n$ entspricht der Schrittweite der unterschiedlich Spannungen und somit der Progressivität der Federung.

Eine erfindungsgemäße Vorrichtung zur Kraftübertragung weist folgende Vorteile auf:

Es ist möglich, mit geringem technischen Aufwand und damit geringen Kosten eine hohe Progressivität zu erreichen und somit Schwingungen bei der Kraftübertragung nahezu gänzlich auszuschalten.

Bei einem Bruch einer herkömmlichen Vorrichtung mit eingebauter Feder kann durch die schwere beschleunigte Feder eine Gefährdung ausgehen, was durch die Erfindung verhindert wird. Bricht eines der Seile, wird die aufgebaute Kraft durch die anderen noch intakten Seile aufgefangen.

Im folgenden wird die Erfindung anhand eines Beispiels und mit Bezug auf die beiliegenden Zeichnungen näher erläutert.

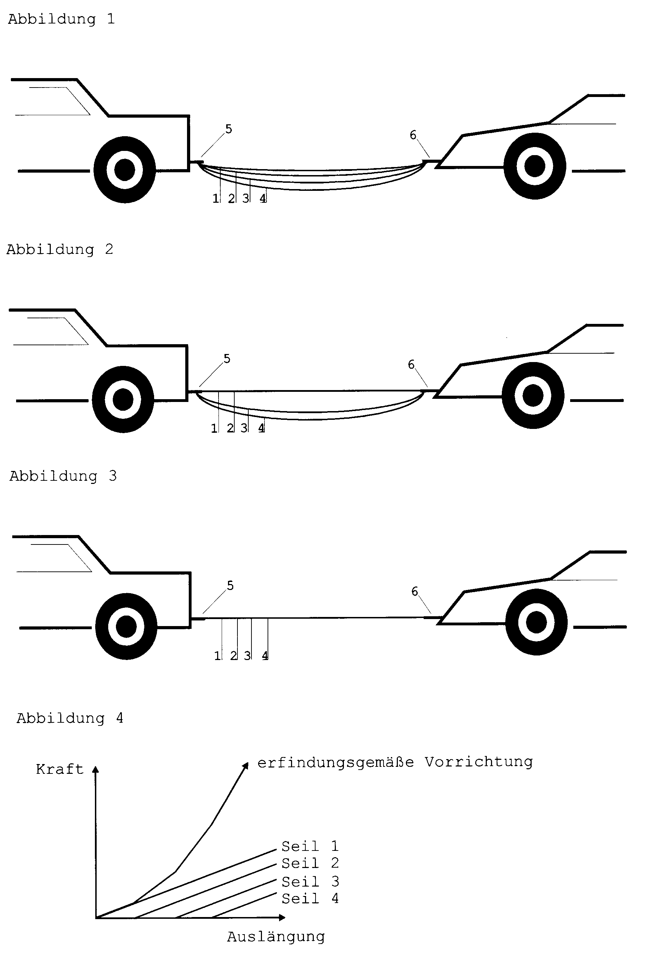

Abbildung 1 zeigt in der Seitenansicht ein erfindungsgemäßes Abschleppseil für Kraftfahrzeuge in einem Zustand, in dem keine Kraft übertragen wird. Hierbei sind die Seile 1,2,3 und 4 an den Abschleppösen 5 und 6 der Kraftfahrzeuge befestigt.

Abbildung 2 zeigt einen Lastzustand, bei dem einige Seile 1 und 2 bereits Kraft übertragen und einige Seile 3 und 4 ungespannt sind.

Abbildung 3 zeigt den Lastzustand, in dem die Seile 1,2,3 und 4 gespannt sind.

Abbildung 4 zeigt ein Diagramm, das die resultierende Kraft in Bezug auf die Auslängung der Vorrichtung, die der Summe der Kraftverläufe der einzelnen Seile entspricht, darstellt.

Das Abschleppseil des Anwendungsbeispiels besteht aus vier unterschiedlich langen Seilen gleichen Materials und gleichen Durchmessers. Der Unterschied der Seillängen wirkt sich in der Funktion $y = n^x$ direkt auf die Konstante $n$ aus. Die Konstante $n$ entspricht der Progressivität der Federung. Durch den nichtlinearen Kraftaufbau beim Abschleppen wird erreicht, daß sich keine Schwingungen aufbauen und ein ruckfreies Abschleppen möglich ist, da die rückstellende Kraft exponentiell ansteigt.

**Patentansprüche**

1. Vorrichtung zur progressiven Kraftübertragung die es ermöglicht, zwei unterschiedlich beschleunigte Massekörper zu koppeln und dabei sowohl Schwingungen verringert als auch Kraftspitzen kompensiert,
dadurch gekennzeichnet,

daß mehrere unterschiedlich lange Seile jeweils an einem Massekörper in gleicher Entfernung befestigt sind.

2. Vorrichtung nach Patentanspruch 1,
dadurch gekennzeichnet,

daß mehrere gleich oder unterschiedlich lange Seile jeweils an einem Massekörper in unterschiedlicher Entfernung befestigt sind.

3. Vorrichtung nach Patentanspruch 1,
dadurch gekennzeichnet,

daß sich gleich lange Seile nach dem Kraftaufbau in unterschiedlich gespanntem Zustand befinden.

4. Vorrichtung nach Patentanspruch 1,
dadurch gekennzeichnet,

daß Teile von einem oder mehreren Seilen durch Umlenkung und Fixierung beim Kraftaufbau unterschiedlich stark gespannt werden.

Abbildung 1

Abbildung 2

Abbildung 3

Abbildung 4

Europäisches
Patentamt

**EUROPÄISCHER RECHERCHENBERICHT**

Nummer der Anmeldung

EP 97 11 9607

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 5 221 121 A (R. ZICHNER) <br> * Spalte 5, Zeile 38-61; Abbildung 4 * <br> --- | 1 | B60D1/18 |
| A | FR 864 351 A (FRITZ MOMMENDEY & SOHN) <br> * das ganze Dokument * <br> --- | 1 | |
| A | DE 19 44 193 U (ARTHUR MULLER & SOHNE) <br> * das ganze Dokument * <br> --- | 1 | |
| A | DE 28 41 603 A (P. KRUPANEK) <br> * Abbildungen 1-7 * <br> --- | 1 | |
| A | DE 30 17 915 A (E. KRATZMEIER) <br> * Abbildungen 1-3 * <br> --- | 1 | |
| A | FR 815 146 A (SOC. CENTRALE DE CHEMINS DE FER ET D'ENTREPRISES) <br> * Abbildungen 1-3 * <br> --- | 1 | |
| A | US 5 308 101 A (C. MONTY) <br> * Abbildungen 1-8 * <br> ----- | 1 | **RECHERCHIERTE SACHGEBIETE (Int.Cl.6)** <br><br> B60D <br> B66C |

Der vorliegende Recherchenbericht wurde für alle Patentansprüche erstellt

| Recherchenort | Abschlußdatum der Recherche | Prüfer |
|---|---|---|
| DEN HAAG | 19.Februar 1998 | Kusardy, R |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes
    Dokument

EPO FORM 1503 03.82 (P04C03)